# EUROPÄISCHE PATENTSCHRIFT

(11) **EP 2 140 970 B1**
(45) Veröffentlichungstag und Bekanntmachung des Hinweises auf die Patenterteilung: **15.08.2012**
(21) Anmeldenummer: 09008558.0
(22) Anmeldetag: 30.06.2009
(51) Int. Cl.: B23Q 9/00, B27B 27/00, F16C 29/00

(54) **Saugeinrichtung und Führungsschienensystem**
Suction device and guiding rail system
Dispositif d'aspriration et système de rail de guidage

(30) Priorität: 01.07.2008 DE 102008031077
(43) Veröffentlichungstag der Anmeldung: 06.01.2010
(73) Patentinhaber: Mafell AG, 78727 Oberndorf a.N. (DE)
(72) Erfinder: Eisenbeis, Dieter, 72160 Horb-Obertalheim (DE)
(74) Vertreter: Manitz, Finsterwald & Partner GbR

(56) Entgegenhaltungen:
- DE-A1- 3 906 300
- DE-A1- 4 203 808
- DE-C1- 4 433 567

## Beschreibung

Die vorliegende Erfindung betrifft eine Saugeinrichtung zum Fixieren eines Führungsschienenelements für elektrische Bearbeitungsmaschinen, welches eine an der Unterseite ausgebildete, nach unten offene Ausnehmung mit einem an einer Stirnseite des Führungsschienenelements befindlichen offenen Ende aufweist, auf einer Arbeitsfläche, insbesondere einem Werkstück, mittels Unterdruck. Die Erfindung betrifft ferner ein Führungsschienensystem, das ein Führungsschienenelement und eine Saugeinrichtung umfasst.

Führungsschienen im Handwerksbereich dienen dazu, eine elektrische Bearbeitungsmaschine, beispielsweise eine Handkreissäge, Oberfräse oder dergleichen, entlang einer vorgegebenen Arbeitslinie über ein Werkstück zu führen. Zu diesem Zweck muss die Führungsschiene auf dem Werkstück fixiert werden, um ein Verrutschen der Bearbeitungsmaschine während der Führungsbewegung zu vermeiden. Dies kann beispielsweise dadurch erfolgen, dass die Führungsschiene mit Schraubzwingen an dem Werkstück festgeklemmt wird. Das Anbringen und Lösen derartiger Schraubzwingen wird in der Praxis allerdings oft als lästig empfunden. Es sind daher Führungsschienen vorgeschlagen worden, die mittels Unterdruck an dem Werkstück fixiert werden können. Eine Vorrichtung dieser Art ist beispielsweise in der EP 0 712 686 A1 beschrieben. Bei diesem System ist an einer Stelle der Unterseite der Führungsschiene ein Saugkasten ausgebildet, an welchen von einem Staubsauger ein Unterdruck vermittelt wird. Dazu muss die nach unten weisende Öffnung des Saugkastens stets auf dem Werkstück aufliegen und darf nicht darüber hinaus ragen, was die Einsatzmöglichkeiten der Führungsschiene einschränkt. Aufgrund der örtlich begrenzten Saugwirkung kann zudem insbesondere bei längeren Führungsschienen die Haltekraft zu gering sein. Die Führungsschiene weist zudem einen relativ komplizierten Aufbau auf.

Die Druckschrift DE 39 06 300 A1 offenbart eine Führungsschiene für eine Werkzeugmaschine, welche einen sich in Längsrichtung erstreckenden Staubabsaugkanal aufweist. Der Staubabsaugkanal ist zur Oberseite hin durch zwei flexible Dichtleisten abgedeckt. Ein Mundstück einer Absauganlage kann zwischen den beiden Dichtleisten hindurchgesteckt und den Staubabsaugkanal entlanggeführt werden.

In der DE 42 03 808 A1 ist eine Führungsschiene mit einer in Längsrichtung verlaufenden Unterdruckleitung sowie mehreren nach unten geöffneten und von Dichtungen umgebenen Saugräumen offenbart.

Die EP 0 887 470 A1 offenbart eine Vorrichtung zur Straßenbahnschienenreinigung, welche ein rotierendes Besenrad zum Lösen von Schmutzteilchen in der Schienenrille sowie einen Saugschuh zum Absaugen der gelösten Schmutzteilchen umfasst.

Aufgabe der Erfindung ist es, das unterdruckbasierte Fixieren von Führungsschienenelementen auf einer Arbeitsfläche zuverlässiger, flexibler und kostengünstiger zu gestalten.

Die Lösung dieser Aufgabe erfolgt zum einen durch eine Saugeinrichtung mit den Merkmalen des Anspruchs 1.

Erfindungsgemäß weist die Saugeinrichtung wenigstens einen Saugschuh auf, der einen Anschlussstutzen zum Anschließen der Saugeinrichtung an eine Unterdruckquelle und eine Haube umfasst, welche mit dem Anschlussstutzen in Strömungsverbindung steht. Die Haube weist einen in Anlage an das Führungsschienenelement bringbaren Anlageabschnitt und einen gegenüber dem Anlageabschnitt vorspringenden Dichtabschnitt derart auf, dass einerseits über die Haube eine Strömungsverbindung von dem Anschlussstutzen zu der Ausnehmung besteht und andererseits die Ausnehmung durch den Saugschuh in Richtung der Stirnseite des Führungsschienenelements abgedichtet ist.

Die Führungsschiene muss in diesem Fall nicht mit aufwendigen Merkmalen zur Ausbildung eines Saugkastens versehen sein, sondern lediglich mit einer einfachen Ausnehmung an ihrer Unterseite. Insbesondere können einfach herzustellende und auch ohne Saugeinrichtung verwendbare Standardschienen verwendet werden. Der Anschlussstutzen kann so gestaltet sein, dass er an den Schlauch eines herkömmlichen Handwerksstaubsaugers anschließbar ist. Somit ist lediglich ein Saugschuh als einfacher Adapter erforderlich, um eine Unterdruckfixierung einer herkömmlichen Führungsschiene mittels einer herkömmlichen Saugvorrichtung zu realisieren.

Die der Erfindung zugrunde liegende Aufgabe wird ferner durch ein Führungsschienensystem mit den Merkmalen des Anspruchs 12 gelöst.

Mögliche Weiterbildungen der Erfindung sind in den abhängigen Ansprüchen, der Zeichnung sowie der Beschreibung angegeben.

Gemäß einer Ausführungsform der Erfindung umfasst der Saugschuh zusätzlich zu dem Anschlussstutzen einen Absaugstutzen zum Anschließen der Saugeinrichtung an eine Partikelabführeinrichtung einer Bearbeitungsmaschine, wobei insbesondere der Absaugstutzen ebenfalls mit dem Anschlussstutzen in Strömungsverbindung steht. Es ist dann möglich, einen vom Anschlussstutzen des Saugschuhs zu einer externen Unterdruckquelle führenden Schlauch sowohl zum Absaugen von Spänen und Staub als auch zum Fixieren der Führungsschiene auf dem Werkstück zu nutzen. Es ist lediglich ein kurzes, von der Bearbeitungsmaschine zum Absaugstutzen führendes Schlauchstück notwendig.

Vorzugsweise weist der Anschlussstutzen zwei voneinander getrennte, gleichzeitig an eine gemeinsame Unterdruckquelle anschließbare Strömungskanäle auf, wobei der eine Strömungskanal in den Absaugstutzen und der andere Strömungskanal in die Haube mündet. Auf diese Weise kann trotz der vorteilhaften Verwendung einer gemeinsamen Unterdruckquelle eine hohe Saugwirkung erzielt werden.

Gemäß einer Ausführungsform der Erfindung ist der Saugschuh als oberer Saugschuh ausgebildet, dessen Haube auf ein stirnseitiges Ende des Führungsschienenelements derart aufsetzbar ist, dass das offene Ende der Ausnehmung in die Haube mündet. Ein derartig gestalteter Saugschuh kann auch dann eingesetzt werden, wenn beide Enden des Führungsschienenelements auf der Arbeitsfläche aufliegen.

Die Haube kann bei dieser Ausführungsform eine nach unten weisende Öffnung aufweisen, die, insbesondere mittels wenigstens eines elastischen Dichtelements, durch einen Abschnitt der Arbeitsfläche, auf der das Führungsschienenelement aufliegt, abdichtbar ist. Es wird also das Werkstück oder die Auflagefläche selbst als Wand genutzt, um einen gegenüber der Umgebung abgedichteten Saugraum zu schaffen.

Gemäß einer anderen Ausführungsform der Erfindung ist der Saugschuh als unterer Saugschuh ausgebildet, dessen Haube auf die Unterseite des Führungsschienenelements aufsetzbar oder aufschiebbar ist und wenigstens einen Dichtvorsprung aufweist, der mit der Ausnehmung in Eingriff bringbar ist, insbesondere durch Einschieben in das offene Ende der Ausnehmung, um die Ausnehmung in Richtung der Stirnseite des Führungsschienenelements abzudichten. Ein derartiger unterer Saugschuh kann beispielsweise dann eingesetzt werden, wenn das betreffende Ende oder beide Enden der Führungsschiene über die Arbeitsfläche hinausragen. Der Dichtvorsprung sorgt dabei für ein zuverlässiges Verschließen der Ausnehmung in der von der Arbeitsfläche weg weisenden Richtung.

Vorzugsweise ist der untere Saugschuh bei auf die Unterseite des Führungsschienenelements aufgesetzter Haube längs der Ausnehmung verschiebbar. Der Saugschuh kann dadurch auf schnelle und einfache Weise an den Rand der Arbeitsfläche herangeführt werden, um die Erzeugung eines Unterdrucks ohne eine ansonsten freiliegende untere Öffnung der Ausnehmung zwischen dem Saugschuh und dem Rand der Arbeitsfläche zu ermöglichen. Die Führungsschiene selbst kann dabei in ihrer jeweiligen Position bleiben.

Der untere Saugschuh kann auch eine von der Haube abstehende Abdeckplatte umfassen, durch welche ein Abschnitt der Ausnehmung abdichtbar ist. Bei Vorhandensein einer derartigen Abdeckplatte ist es nicht mehr erforderlich, den unteren Saugschuh exakt in Angrenzung an den Rand der Arbeitsfläche zu positionieren. Es genügt, wenn die Abdeckplatte in die Arbeitsfläche hineinragt. Ein erfindungsgemäßer unterer Saugschuh mit Abdeckplatte kann also auch dann eingesetzt werden, wenn der Rand der Arbeitsfläche nicht mit der Außenkontur des Saugschuhs übereinstimmt, weil das Führungsschienenelement zum Beispiel schräg über den Rand der Arbeitsfläche hinausragt.

Bevorzugt weist die Haube wenigstens einen Haltevorsprung auf, der mit einer Profilnut und/oder einem Profilsteg des Führungsschienenelements in Eingriff bringbar ist. Der zu einem Profilelement des Führungsschienenelements passende Haltevorsprung erleichtert das Positionieren beim Anlegen des Saugschuhs an das Führungsschienenelement. Ferner kann der Saugschuh durch den Haltevorsprung in der jeweiligen Stellung gehalten werden, ohne dass hierzu separate Befestigungselemente erforderlich wären.

Zumindest ein Haltevorsprung kann wenigstens eine Hinterschneidung umfassen, um den Saugschuh an dem Führungsschienenelement zu halten. Durch die Hinterschneidung wird die Haltewirkung verbessert und ein Abrutschen des Saugschuhs vom Führungsschienenelement wird sicher vermieden.

Der Saugschuh kann ein durch einen Bediener betätigbares Feststellelement umfassen, das in der Lage ist, den Saugschuh an dem Führungsschienenelement zu befestigen, insbesondere festzuklemmen. Hierdurch wird auch bei einem versehentlichen Stoß gegen den Saugschuh oder einen angeschlossenen Schlauch ein Abrutschen des Saugschuhs vom Führungsschienenelement verhindert.

Vorzugsweise umfasst der Saugschuh ein durch einen Bediener betätigbares Schaltelement, das zwischen einer den Unterdruck hemmenden Sperrstellung und einer Freigabestellung umschaltbar ist. Dadurch ist es möglich, die Fixierung des Führungsschienenelements auf der Arbeitsfläche für kurze Zeit aufzuheben, um beispielsweise die Ausrichtung des Führungsschienenelements durch Verschieben zu korrigieren. Ein Ausschalten und erneutes Einschalten der externen Unterdruckquelle oder ein Abnehmen und Wiederaufsetzen des Saugschuhs ist nicht erforderlich.

Vorzugsweise ist das Schaltelement in Richtung der Freigabestellung vorgespannt, da die Fixierung üblicherweise während des Betriebs nur jeweils kurz gelöst werden muss.

Die Saugeinrichtung kann ein insbesondere separates Abschlusselement umfassen, das mit der Ausnehmung des Führungsschienenelements in Eingriff bringbar, insbesondere in die Ausnehmung einsteckbar, ist, um die Ausnehmung an einer vom Saugschuh entfernt gelegenen Stelle abzudichten. Das Abschlusselement kann also beispielsweise an einem Ende des Führungsschienenelements angebracht werden, während der Saugschuh am entgegengesetzten Ende des Führungsschienenelements angebracht wird. Die Ausnehmung des Führungsschienenelements ist dann in beide Richtungen abgedichtet, wodurch die Saugwirkung in vollem Umfang zur Unterseite des Führungsschienenelements und somit auf die Arbeitsfläche übertragen wird.

Die Abdichtposition des Abschlusselements kann längs der Ausnehmung verstellbar sein, insbesondere durch Verschieben des Abschlusselements längs der Ausnehmung. Dadurch kann die Lage des Abschlusselements schnell an die jeweils aktuelle Konstellation von Werkstück und Führungsschienenelement angepasst werden.

Auch das Abschlusselement kann eine Abdeckplatte umfassen, durch welche ein Abschnitt der Unterseite des Führungsschienenelements abdichtbar ist, wobei insbesondere das Abschlusselement quer zur Längserstreckung des Führungsschienenelements geteilt ist. Aufgrund der Abdeckplatte reicht es aus, das Abschlusselement lediglich grob im Bereich des Randes der Arbeitsfläche zu positionieren, da ein größerer Bereich der Ausnehmung durch die Abdeckplatte nach unten abgedichtet ist. Die Teilung des Abschlusselements quer zur Längserstreckung des Führungsschienenelements gestattet den Einsatz des Abschlusselements auch bei Vorliegen eines in Längsrichtung des Führungsschienenelements verlaufenden Steges oder Gummiwulstes an der Unterseite des Führungsschienenelements.

Vorzugsweise umfasst das Abschlusselement ein abnehmbares Griffelement, wobei insbesondere das Griffelement eine mehrteilige Abdeckplatte des Abschlusselements zusammenhaltend überbrückt und/oder zumindest an einer Seite als eine von der Seite und/oder von oben sichtbare Positionsanzeige ausgebildet ist. Das Griffelement erleichtert die Handhabung des Abschlusselements, insbesondere beim Einstecken und Herausziehen. Nach dem Positionieren kann das Griffelement abgenommen werden, damit es nicht bei einem Verschieben des Führungsschienenelements gegen den Rand der Arbeitsfläche stößt. Bei einem geteilten Abschlusselement und insbesondere bei einer mehrteilig ausgebildeten Abdeckplatte kann das Griffelement in vorteilhafter Weise genutzt werden, um die Einzelteile des Abschlusselements zusammenzuhalten. Eine sichtbare Positionsanzeige, beispielsweise ein über den Rand des Führungsschienenelements hinausragender Zeiger, erleichtert das Auffinden des Griffelements, um beispielsweise das Abschlusselement zu verschieben oder das Griffelement abzunehmen.

Eine Ausführungsform der Erfindung sieht ein Führungsschienensystem zum Führen von elektrischen Bearbeitungsmaschinen vor, welches wenigstens ein Führungsschienenelement und wenigstens eine Saugeinrichtung mit den Merkmalen eines der Ansprüche 1 bis 17 umfasst. Das Führungsschienenelement weist eine zum Führen einer Bearbeitungsmaschine ausgebildete Oberseite, eine auf eine Arbeitsfläche, insbesondere ein Werkstück, auflegbare Unterseite und wenigstens eine an der Unterseite ausgebildete, nach unten offene Ausnehmung auf. Das Führungsschienensystem kann auch mehrere miteinander verbindbare Führungsschienenelemente zum Erstellen einer beliebig langen Führungsschiene umfassen. Ebenso kann das Führungsschienensystem sowohl einen oberen Saugschuh als auch einen unteren Saugschuh umfassen, die jeweils in Abhängigkeit von den aktuellen Arbeitsgegebenheiten eingesetzt werden können.

Vorzugsweise ist die Ausnehmung des Führungsschienenelements als geradlinige Profilnut mit an den Stirnseiten des Führungsschienenelements offenen Enden ausgebildet. Dies ermöglicht eine besonders einfache und kostengünstige Herstellung des Führungsschienenelements.

Besonders bevorzugt weist das Führungsschienenelement wenigstens zwei parallel verlaufende Profilnuten auf. Dies schafft sowohl eine hohe Stabilität des Führungsschienenelements bei geringem Materialaufwand als auch eine verbesserte Saugwirkung.

Zumindest eine Profilnut kann wenigstens eine Hinterschneidung aufweisen, um eine sichere Eingriffsmöglichkeit für Halte- und/oder Dichtvorsprünge eines Saugschuhs zu bieten.

Die Erfindung wird im Folgenden beispielhaft unter Bezugnahme auf die Zeichnung beschrieben. Es zeigen:
- Fig. 1: eine schematische Seitenansicht einer erfindungsgemäßen Saugeinrichtung gemäß einer ersten Ausführungsform, die an ein Führungsschienenelement angelegt ist;
- Fig. 2: eine schematische Ansicht der Saugeinrichtung gemäß Fig. 1 von der Seite;
- Fig. 3: eine schematische Ansicht der Saugeinrichtung gemäß Fig. 1 von unten;
- Fig. 4: eine schematische Ansicht einer erfindungsgemäßen Saugeinrichtung gemäß einer zweiten Ausführungsform, die an ein Führungsschienenelement angelegt ist, von der Seite;
- Fig. 5: eine schematische Ansicht der Saugeinrichtung gemäß Fig. 4 von unten; und
- Fig. 6: eine schematische Übersichtsdarstellung eines erfindungsgemäßen Führungsschienensystems mit einem Führungsschienenelement, einer Saugeinrichtung und einer aufgesetzten Bearbeitungsmaschine, wobei die Bearbeitungsmaschine und das Führungsschienenelement an eine externe Unterdruckquelle angeschlossen sind.

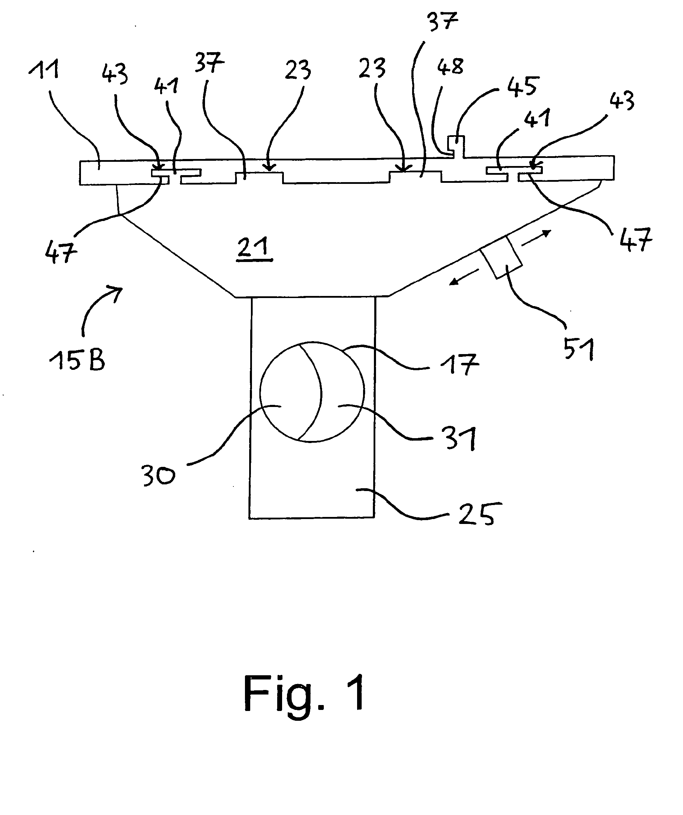

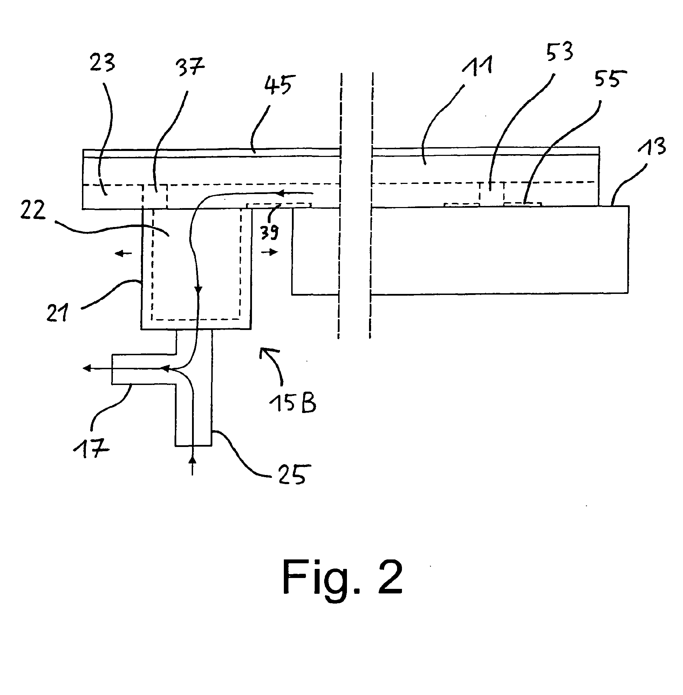

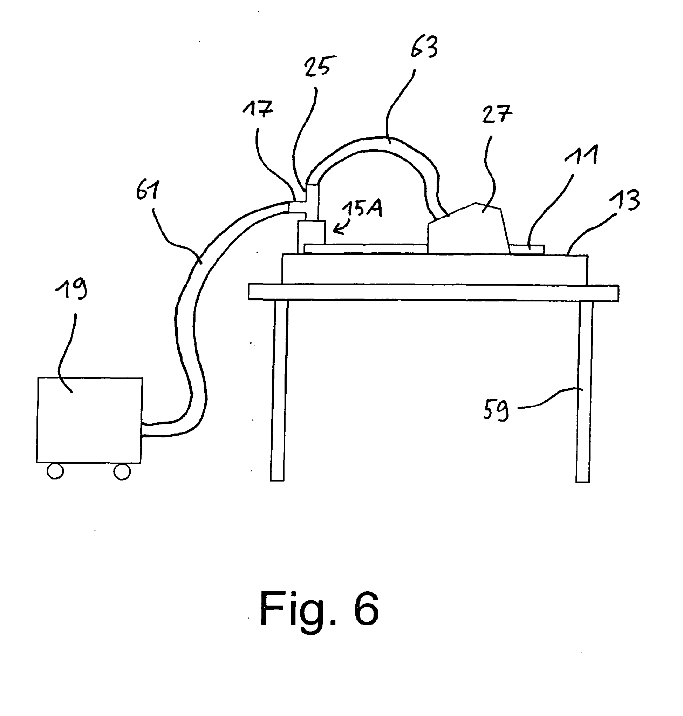

Unter Bezugnahme auf die Fig. 1 bis 3 wird eine erste Ausführungsform einer erfindungsgemäßen Saugeinrichtung beschrieben, die einen unteren Saugschuh 15B aufweist. Der untere Saugschuh 15B ist in Anlage an ein Führungsschienenelement 11 dargestellt, bei dem es sich um eine standardmäßig gefertigte Führungsschiene für den Handwerksbereich handeln kann. Das Führungsschienenelement 11 weist eine zum Führen einer Bearbeitungsmaschine 27 (Fig. 6) ausgebildete Oberseite und eine auf eine Arbeitsfläche 13 (Fig. 2), beispielsweise ein Werkstück, auflegbare Unterseite auf. Zum Führen der Bearbeitungsmaschine 27 ist an der Oberseite des Führungsschienenelements 11 ein Profilsteg 45 mit einer Hinterschneidung 48 ausgebildet, der beispielsweise in eine an einer Grundplatte der Bearbeitungsmaschine 27 ausgebildete Nut eingreifen kann. An der Unterseite des Führungsschienenelements 11 sind zwei nach unten offene Ausnehmungen 23 sowie zwei Profilnuten 43 mit Hinterschneidungen 47 ausgebildet, die sich jeweils über die gesamte Länge des Führungsschienenelements 11 erstrecken und an den Stirnseiten jeweils entsprechende Öffnungen aufweisen. Die Gestaltung des Führungsschienenelements 11 ist in den Figuren lediglich schematisch und beispielhaft dargestellt und kann auch wesentlich komplexere Formen beinhalten. Das Führungsschienenelement 11 kann als Metallprofilteil ausgebildet sein und es kann an einem längsseitigen Rand oder an der Unterseite elastische Auflage-und Führungselemente umfassen, wie z.B. Gummilippen oder Gummiwülste (nicht gezeigt), um zum Beispiel eine sichere Auflage auf der Arbeitsfläche zu gewährleisten und einen gewissen Schutz gegen Verrutschen zu bieten.

Der untere Saugschuh 15B umfasst einen Anschlussstutzen 17 zum Anschließen der Saugeinrichtung an eine Unterdruckquelle 19 (Fig. 6) und eine Haube 21, welche mit dem Anschlussstutzen 17 in Strömungsverbindung steht. Zusätzlich ist ein Absaugstutzen 25 zum Anschließen der Saugeinrichtung an eine Partikelabführeinrichtung der Bearbeitungsmaschine 27 vorgesehen, der mit dem Anschlussstutzen 17 in Strömungsverbindung steht. In Fig. 1 ist zu erkennen, dass der Anschlussstutzen 17 zwei voneinander getrennte Strömungskanäle 30, 31 aufweist, die gleichzeitig an eine gemeinsame Unterdruckquelle 19 anschließbar sind. Ein Strömungskanal 30 mündet dabei in den Absaugstutzen 25 und der andere Strömungskanal 31 mündet in die Haube 21. Es hat sich gezeigt, dass es in Bezug auf die Saugwirkung vorteilhaft ist, den Strömungskanal 30 zum Absaugen von Spänen und den Strömungskanal 31 zum Fixieren des Führungsschienenelements 11 wenigstens über eine bestimmte Länge zu trennen. Hinsichtlich der Querschnitte der beiden Strömungskanäle 30, 31 hat sich herausgestellt, dass besonders vorteilhaft eine nichtidentische Querschnittsform der beiden Strömungskanäle 30, 31 ist, wie es beispielhaft in Fig. 1 zu erkennen ist.

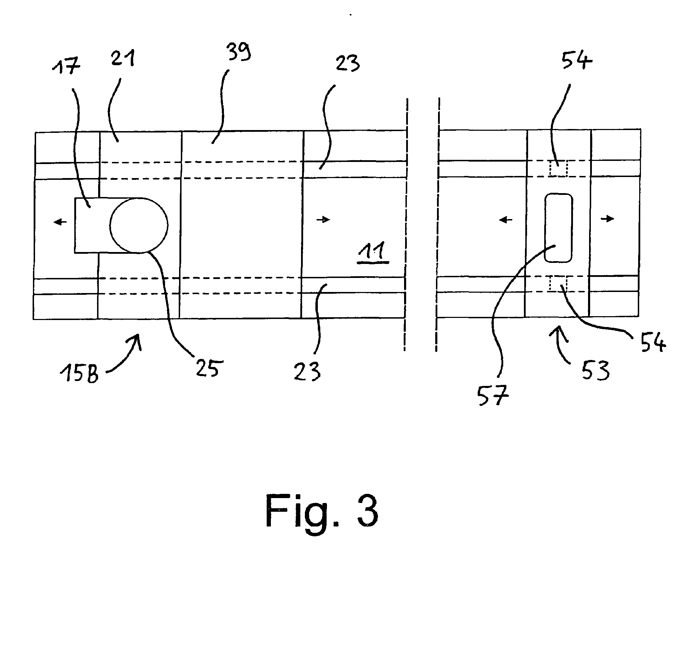

Die Haube 21 weist eine Öffnung mit einer speziellen Formgebung auf, die an das Profil der Unterseite des Führungsschienenelements 11 angepasst ist. Die Haube 21 weist insbesondere zwei Dichtvorsprünge 37 auf, die mit dem Profil der Ausnehmungen 23 übereinstimmen. Zusätzlich weist die Haube 21 zwei Haltevorsprünge 41 auf, die mit den beiden Profilnuten 43 des Führungsschienenelements 11 übereinstimmen. Es ist somit ein seitliches Einschieben oder Einstecken des unteren Saugschuhs 15B in die Ausnehmungen 23 und die Profilnuten 43 möglich. Dadurch, dass die Haltevorsprünge 41 Hinterschneidungen 47 aufweisen, ist der eingeschobene untere Saugschuh 15B fest mit dem Führungsschienenelement 11 verbunden. Die Dimensionierung der Dichtvorsprünge 37 und der Haltevorsprünge 41 ist derart auf die Ausnehmungen 23 bzw. die Profilnuten 43 abgestimmt, dass ein Verschieben des unteren Saugschuhs 15B entlang des Führungsschienenelements 11 möglich ist (in Fig. 2 und 3 durch Pfeile dargestellt).

Die Ausnehmungen 23 sind durch die Dichtvorsprünge 37 in der von der Arbeitsfläche 13 weg weisenden Richtung, gemäß Fig. 2 also nach links hin, abgedichtet. Wie in Fig. 2 zu erkennen ist, sind an der entgegengesetzten rechten Seite der Haube 21 keine Dichtvorsprünge vorgesehen. Deshalb besteht eine Strömungsverbindung von dem Anschlussstutzen 17 zu der Ausnehmung 23.

Wie aus den Fig. 2 und 3 hervorgeht, steht eine Abdeckplatte 39 von der Haube 21 des unteren Saugschuhs 15B ab, welche einen Abschnitt der Ausnehmung 23 nach unten abdichtet. Die Abdeckplatte 39 kann als dünnes flächiges Blechteil ausgebildet sein und ist in einem insbesondere durch sich in Längsrichtung erstreckende Gummilippen oder Gummiwülste ergebenden Zwischenraum der Unterseite des Führungsschienenelements 11 aufgenommen, so dass sie einem bestimmungsgemäßen Aufliegen des Führungsschienenelements 11 auf dem Werkstück 13 nicht entgegensteht. Durch die Oberseite der Ausnehmung 23, den Dichtvorsprung 37, die Haube 21 sowie die Abdeckplatte 39 wird somit eine Saugkammer 22 gebildet, welche eine Strömungsverbindung zwischen dem Anschlussstutzen 17 und der Ausnehmung 23 definiert.

An einer vom unteren Saugschuh 15B entfernten Stelle ist ein Abschlusselement 53 in die Ausnehmung 23 des Führungsschienenelements 11 eingesteckt. Bei dem Abschlusselement 53 kann es sich beispielsweise um mehrere einzelne Dichtelemente, wie z.B. Gummistopfen handeln, welche durch eine Abdeckplatte 55 zusammengehalten sind. Das Abschlusselement 53 ist gemäß Fig. 3 mit einem abnehmbaren Griffelement 57 ausgestattet, mittels dem das Abschlusselement 53 leicht vom Führungsschienenelement 11 abgenommen oder aber in den Ausnehmungen 23 verschoben werden kann (in Fig. 3 durch Pfeile dargestellt). Falls gewünscht, kann das Griffelement 57 auch eine Positionsanzeige (nicht dargestellt) umfassen, die bei aufliegendem Führungsschienenelement 11 von der Seite und/oder von oben sichtbar ist und einem Bediener das Auffinden des Griffelements 57 erleichtert.

Um Raum für einen an der Unterseite des Führungsschienenelements ausgebildeten Steg, beispielsweise einen durchgehenden Gummiwulst, zu schaffen, kann die Abdeckplatte 55 des Griffelements 57 auch mehrteilig ausgebildet sein, wobei sie durch das Griffelement 57 zusammengehalten wird.

Aus Fig. 2 geht hervor, dass die Ausnehmung 23 des Führungsschienenelements 11 zu einer Stirnseite hin durch die Dichtvorsprünge 37 abgedichtet ist, während sie in Richtung der anderen Stirnseite durch das Abschlusselement 53 abgedichtet ist. Da zudem der Zwischenraum zwischen der Haube 21 des unteren Saugschuhs 15B und dem Rand des Werkstücks 13 durch die Abdeckplatte 39 abgedichtet ist, wird ein über den Anschlussstutzen 17 an die Ansaugkammer 22 vermittelter Unterdruck weitgehend ungeschwächt an die untere Öffnung der Ausnehmung 23 und somit auf die Oberfläche des Werkstücks 13 übertragen. Hierdurch wird das Führungsschienenelement 11 verrutschsicher auf dem Werkstück 13 fixiert.

Der untere Saugschuh 15B umfasst auch ein Schaltelement 51, das durch einen Bediener betätigbar ist und zwischen einer Sperrstellung und einer Freigabestellung umschaltbar ist. Die Sperrstellung ermöglicht ein Absperren oder Abschwächen des an die Haube 21 vermittelten Unterdrucks. Dies kann dadurch erfolgen, dass die Strömungsverbindung zwischen dem Anschlussstutzen 17 und der Haube 21 unterbrochen wird, indem beispielsweise eine Platte vor der Mündung des Anschlussstutzens 17 in die Haube 21 eingeschoben wird. Alternativ kann das Schaltelement 51 in der Sperrstellung auch eine definierte Leckage aus der Haube 21 schaffen, indem beispielsweise eine Öffnung bereitgestellt wird. Das Schaltelement 51 ist in Richtung der Freigabestellung vorgespannt, beispielsweise durch eine Feder.

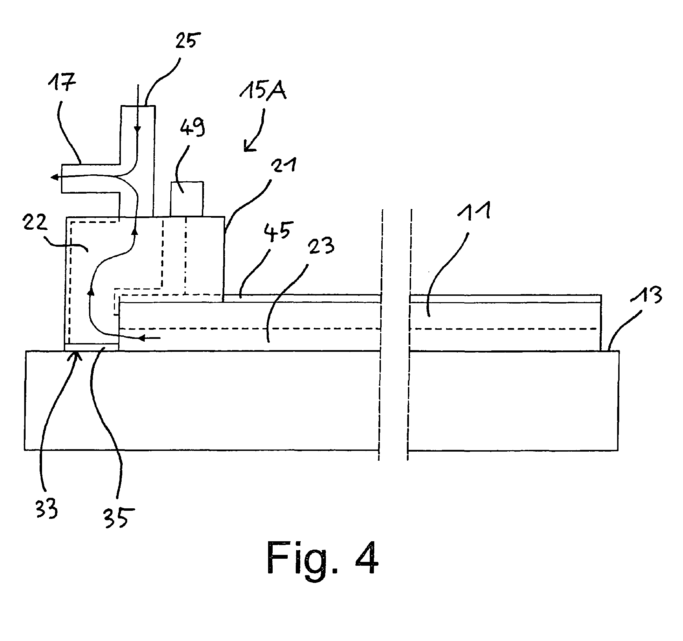

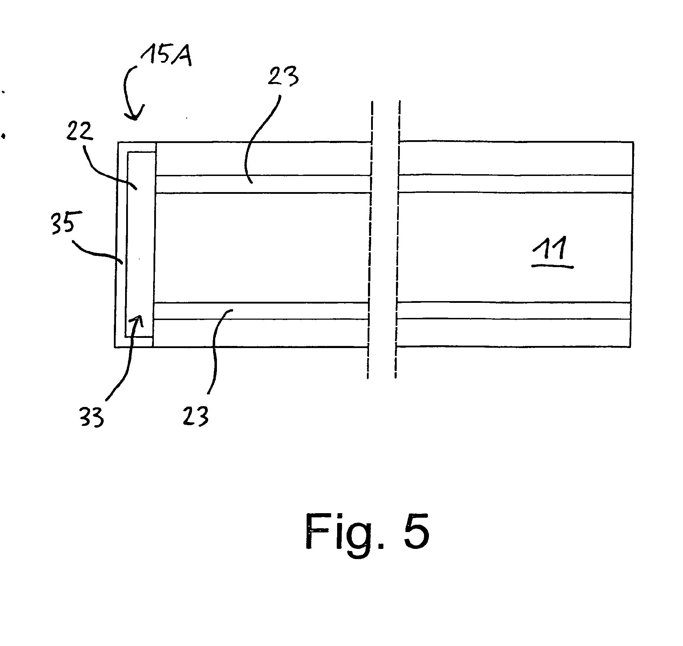

Unter Bezugnahme auf die Fig. 4 und 5 wird eine zweite Ausführungsform einer erfindungsgemäßen Saugeinrichtung beschrieben, die einen oberen Saugschuh 15A aufweist. Wie in Fig. 4 zu erkennen ist, wird der obere Saugschuh 15A von oben oder von vorn bzw. hinten auf das Führungsschienenelement 11 aufgesetzt, wobei sich das Werkstück 13 über das zugehörige Ende des Führungsschienenelements 11 hinaus erstreckt. Das stirnseitige offene Ende der Ausnehmung 23 mündet somit in die Haube 21 des oberen Saugschuhs 15A. Die Haube 21 weist eine nach unten weisende Öffnung 33 auf und ist in zwei Abschnitte unterteilt, wobei ein Abschnitt auf dem Führungsschienenelement 11 und der andere Abschnitt auf dem Werkstück 13 aufliegt. Die Öffnung 33 ist in dem an das Werkstück 13 angrenzenden Abschnitt mit einem elastischen Dichtelement 35 versehen, der für eine Abdichtung der Haube 21 gegenüber der Oberfläche des Werkstücks 13 sorgt.

Wie in den Fig. 4 und 5 zu erkennen ist, wird somit durch die Haube 21, einen Abschnitt der Oberfläche des Werkstücks 13 sowie der Stirnfläche des Führungsschienenelements 11 wiederum eine Saugkammer 22 gebildet, welche eine Strömungsverbindung zwischen dem Anschlussstutzen 17 und dem stirnseitigen offenen Ende der Ausnehmung 23 schafft. Die untere Öffnung der Ausnehmung 23 ist ganzflächig durch das Werkstück 13 abgedeckt, weshalb ein an die Saugkammer 22 vermittelter Unterdruck direkt auf die Oberfläche des Werkstücks 13 übertragen wird. Hierdurch wird wie bei der ersten Ausführungsform ein verrutschsicheres Halten des Führungsschienenelements 11 auf dem Werkstück 13 ermöglicht.

Bei der in den Fig. 4 und 5 dargestellten Ausführungsform ist kein Abschlusselement vorgesehen, da ein solches nicht zwingend erforderlich ist. Es kann insbesondere bei relativ langen Führungsschienenelementen 11 sein, dass die Leckage an den stirnseitigen Öffnungen der Ausnehmung 23 im Verhältnis zur Gesamtsaugfläche unbedeutend gering ist.

Um den oberen Saugschuh 15A sicher an dem Führungsschienenelement 11 zu befestigen, ist ein durch einen Bediener betätigbares Feststellelement 49 vorgesehen, mit dem der obere Saugschuh 15A an dem Führungsschienenelement 11 festgeklemmt werden kann. Das Feststellelement 49 kann beispielsweise in eine Hinterschneidung 48 des Profilstegs 45 eingreifen.

Der Gebrauch einer erfindungsgemäßen Saugeinrichtung wird anhand von Fig. 6 beschrieben. Ein zu bearbeitendes Werkstück 13 liegt auf einem Arbeitstisch 59 auf. Ein Führungsschienenelement 11 wird auf das Werkstück 13 aufgelegt und in die gewünschte Position gebracht. Anschließend wird ein oberer Saugschuh 15A auf ein Ende des Führungsschienenelements 11 aufgesetzt und über den Anschlussstutzen 17 sowie einen flexiblen Anschlussschlauch 61 an eine externe Unterdruckquelle 19, beispielsweise einen Staubsauger, angeschlossen. Eine Bearbeitungsmaschine 27 wird an das Führungsschienenelement 11 angelegt oder auf das Führungsschienenelement 11 aufgelegt, wobei eine Spanabsaugeinrichtung der Bearbeitungsmaschine 27 über einen kurzen Absaugschlauch 63 an den Absaugstutzen 25 angeschlossen wird. Bei dem Absaugschlauch 63 kann es sich insbesondere um einen längenflexiblen Schlauch handeln, also um einen Schlauch, der z.B. nach Art des Ziehharmonika-Prinzips in der Länge veränderlich ist. Anschließend wird der Staubsauger 19 in Gang gesetzt, wodurch die Führungsschiene 11 aufgrund des erzeugten Unterdrucks fest in der gewünschten Position auf dem Werkstück 13 gehalten wird. Die Bearbeitungsmaschine 27 kann nun entlang dem Führungsschienenelement 11 über das Werkstück geführt werden, wobei ein Verrutschen der Führungsschiene 11 vermieden wird. Die anfallenden Späne werden über den Absaugschlauch 63 zu dem oberen Saugschuh 15A und von diesem über den gemeinsamen Anschlussschlauch 61 zu dem Staubsauger 19 abgesaugt. Die Vermeidung zweier getrennter, parallel zu führender Schläuche erhöht den Komfort bei der Bedienung der Bearbeitungsmaschine 27 wesentlich. Sofern eine Positionskorrektur des Führungsschienenelements 11 notwendig ist, kann der Bediener das Schaltelement 49 (Fig. 4) in die Sperrstellung bewegen und somit die Fixierung vorübergehend aufheben. Nach dem Verschieben des Führungsschienenelements 11 in die korrekte Position kann der Bediener das Schaltelement 49 loslassen, wodurch es aufgrund der Vorspannung selbsttätig in die Freigabestellung zurückkehrt und das Führungsschienenelement 11 erneut mittels Unterdruck auf dem Werkstück 13 fixiert.

Wenn sich die Konstellation in Bezug auf den durchzuführenden Arbeitsschritt ändert, weil beispielsweise ein Ende der Führungsschiene 11 über den Rand des Werkstücks 13 hinausragt, kann der obere Saugschuh 15A schnell gegen den unteren Saugschuh 15B ausgetauscht werden, da der Anschlussstutzen 17 und der Absaugstutzen 25 durch einfaches Stecken mit den zugehörigen Schläuchen 61, 63 verbunden werden können. Das Führungsschienenelement 11 kann bei abgenommenem Saugschuh auf herkömmliche Weise verwendet werden, da es nicht in besonderer Weise für die Verwendung mit einer Saugeinrichtung angepasst ist. So kann es beispielsweise bei bestimmten einfachen Arbeitsschritten ausreichen, das Führungsschienenelement 11 mit der Hand auf der Werkstückoberfläche zu halten oder es in herkömmlicher Weise mit Schraubzwingen an dem Werkstück 13 zu befestigen. Auch der Staubsauger 19 ist nicht auf die Saugeinrichtung abgestimmt. Weder muss ein separater Anschluss für die Unterdruckfixierung vorgesehen sein, noch ist es erforderlich, hierfür einen besonders gestalteten Zusatzschlauch bereitzustellen.

### Bezugszeichenliste

- 11: Führungsschienenelement
- 13: Arbeitsfläche, Werkstück
- 15A: oberer Saugschuh
- 15B: unterer Saugschuh
- 17: Anschlussstutzen
- 19: Unterdruckquelle, Staubsauger
- 21: Haube
- 22: Saugkammer
- 23: Ausnehmung
- 25: Absaugstutzen
- 27: Bearbeitungsmaschine
- 30, 31: Strömungskanal
- 33: Öffnung
- 35: Dichtelement
- 37: Dichtvorsprung
- 39: Abdeckplatte
- 41: Haltevorsprung
- 43: Profilnut
- 45: Profilsteg
- 47: Hinterschneidung
- 48: Hinterschneidung
- 49: Feststellelement
- 51: Schaltelement
- 53: Abschlusselement
- 54: Dichtstopfen
- 55: Abdeckplatte
- 57: Griffelement
- 59: Arbeitstisch
- 61: Anschlussschlauch
- 63: Absaugschlauch

## Patentansprüche

1. Saugeinrichtung zum Fixieren eines Führungsschienenelements (11) für elektrische Bearbeitungsmaschinen, welches eine an der Unterseite ausgebildete, nach unten offene Ausnehmung (23) mit einem an einer Stirnseite des Führungsschienenelements (11) befindlichen offenen Ende aufweist, auf einer Arbeitsfläche (13), insbesondere einem Werkstück, mittels Unterdruck,
mit wenigstens einem Saugschuh (15), der umfasst:
einen Anschlussstutzen (17) zum Anschließen der Saugeinrichtung an eine Unterdruckquelle (19); und
eine Haube (21), welche mit dem Anschlussstutzen (17) in Strömungsverbindung steht,
**dadurch gekennzeichnet, dass**
die Haube (21) einen in Anlage an eine Oberseite oder Unterseite des Führungsschienenelements (11) bringbaren Anlageabschnitt und
einen gegenüber dem Anlageabschnitt vorspringenden Dichtabschnitt aufweist,
so dass mit dem Dichtabschnitt entweder bei Anlage an die Oberseite das Führungsschienenelement (11) stirnseitig umgriffen werden kann oder bei Anlage an die Unterseite in die Ausnehmung des Führungsschienenelements (11) eingegriffen werden kann, wobei jeweils einerseits über die Haube (21) eine Strömungsverbindung von dem Anschlussstutzen (17) zu der Ausnehmung (23) besteht und andererseits die Strömungsverbindung durch den Saugschuh (15) abgedichtet ist.

2. Saugeinrichtung nach Anspruch 1,
**dadurch gekennzeichnet, dass**
der Saugschuh (15) zusätzlich zu dem Anschlussstutzen (17) einen Absaugstutzen (25) zum Anschließen der Saugeinrichtung an eine Partikelabführeinrichtung einer Bearbeitungsmaschine (27) umfasst, wobei insbesondere der Absaugstutzen (25) ebenfalls mit dem Anschlussstutzen (17) in Strömungsverbindung steht.

3. Saugeinrichtung nach Anspruch 1 oder 2,
**dadurch gekennzeichnet, dass**
der Anschlussstutzen (17) zwei voneinander getrennte, gleichzeitig an eine gemeinsame Unterdruckquelle anschließbare Strömungskanäle (30, 31) aufweist, wobei der eine Strömungskanal (30) in den Absaugstutzen (25) und der andere Strömungskanal (31) in die Haube (21) mündet.

4. Saugeinrichtung nach zumindest einem der vorstehenden Ansprüche,
**dadurch gekennzeichnet, dass**
der Saugschuh (15) als oberer Saugschuh (15A) ausgebildet ist, dessen Haube (21) auf ein stirnseitiges Ende des Führungsschienenelements (11) derart aufsetzbar ist, dass das offene Ende der Ausnehmung (23) in die Haube (21) mündet, wobei insbesondere die Haube (21) eine nach unten weisende Öffnung (33) aufweist, die, insbesondere mittels wenigstens eines elastischen Dichtelements (35), durch einen Abschnitt der Arbeitsfläche (13), auf der das Führungsschienenelement (11) aufliegt, abdichtbar ist.

5. Saugeinrichtung nach einem der Ansprüche 1 bis 3,
**dadurch gekennzeichnet, dass**
der Saugschuh (15) als unterer Saugschuh (15B) ausgebildet ist, dessen Haube (21) auf die Unterseite des Führungsschienenelements (11) aufsetzbar oder aufschiebbar ist und wenigstens einen Dichtvorsprung (37) aufweist, der mit der Ausnehmung (23) in Eingriff bringbar ist, insbesondere durch Einschieben in das offene Ende der Ausnehmung (23), um die Ausnehmung (23) in Richtung der Stirnseite des Führungsschienenelements (11) abzudichten, wobei insbesondere der untere Saugschuh (15B) bei auf die Unterseite des Führungsschienenelements (11) aufgesetzter Haube (21) längs der Ausnehmung (23) verschiebbar ist.

6. Saugeinrichtung nach Anspruch 5,
**dadurch gekennzeichnet, dass**
der untere Saugschuh (15B) eine von der Haube (21) abstehende Abdeckplatte (39) umfasst, durch welche ein Abschnitt der Ausnehmung (23) abdichtbar ist.

7. Saugeinrichtung nach einem der vorstehenden Ansprüche,
**dadurch gekennzeichnet, dass**
die Haube (21) wenigstens einen Haltevorsprung (41) aufweist, der mit einer Profilnut (43) und/oder einem Profilsteg (45) des Führungsschienenelements (11) in Eingriff bringbar ist, wobei insbesondere zumindest ein Haltevorsprung (41) wenigstens eine Hinterschneidung (47) umfasst, um den Saugschuh (15) an dem Führungsschienenelement (11) zu halten.

8. Saugeinrichtung nach zumindest einem der vorstehenden Ansprüche,
**dadurch gekennzeichnet, dass**
der Saugschuh (15) ein durch einen Bediener betätigbares Feststellelement (49) umfasst, das in der Lage ist, den Saugschuh (15) an dem Führungsschienenelement (11) zu befestigen, insbesondere festzuklemmen.

9. Saugeinrichtung nach zumindest einem der vorstehenden Ansprüche,
**dadurch gekennzeichnet, dass**
der Saugschuh (15) ein durch einen Bediener betätigbares Schaltelement (51) umfasst, das zwischen einer den Unterdruck hemmenden Sperrstellung und einer Freigabestellung umschaltbar ist, wobei insbesondere das Schaltelement (51) in Richtung der Freigabestellung vorgespannt ist.

10. Saugeinrichtung nach zumindest einem der vorstehenden Ansprüche,
**dadurch gekennzeichnet, dass**
die Saugeinrichtung ein, insbesondere separates, Abschlusselement (53) umfasst, das mit der Ausnehmung (23) des Führungsschienenelements (11) in Eingriff bringbar, insbesondere in die Ausnehmung (23) einsteckbar, ist, um die Ausnehmung (23) an einer vom Saugschuh (15) entfernt gelegenen Stelle abzudichten, wobei insbesondere die Abdichtposition des Abschlusselements (53) längs der Ausnehmung (23) verstellbar ist, insbesondere durch Verschieben des Abschlusselements (53) längs der Ausnehmung (23).

11. Saugeinrichtung nach Anspruch 10,
**dadurch gekennzeichnet, dass**
das Abschlusselement (53) eine Abdeckplatte (55) umfasst, durch welche ein Abschnitt der Unterseite des Führungsschienenelements (11) abdichtbar ist, wobei insbesondere das Abschlusselement (53) quer zur Längserstreckung des Führungsschienenelements (11) geteilt ist, und/oder
das Abschlusselement (53) ein abnehmbares Griffelement (57) umfasst, wobei insbesondere das Griffelement (57) eine mehrteilige Abdeckplatte (55) des Abschlusselements (53) zusammenhaltend überbrückt und/oder zumindest an einer Seite als eine von der Seite und/oder von oben sichtbare Positionsanzeige ausgebildet ist.

12. Führungsschienensystem zum Führen von elektrischen Bearbeitungsmaschinen, das umfasst:
wenigstens ein Führungsschienenelement (11), das eine zum Führen einer Bearbeitungsmaschine (27) ausgebildete Oberseite, eine auf eine Arbeitsfläche (13), insbesondere ein Werkstück, auflegbare Unterseite und wenigstens eine an der Unterseite ausgebildete, nach unten offene Ausnehmung (23) aufweist; und
wenigstens eine Saugeinrichtung zum Fixieren des Führungsschienenelements (11) auf der Arbeitsfläche (13) mittels Unterdruck, wobei die Saugeinrichtung wenigstens einen Saugschuh (15) aufweist,
der umfasst:
einen Anschlussstutzen (17) zum Anschließen der Saugeinrichtung an eine Unterdruckquelle (19); und
eine Haube (21), welche mit dem Anschlussstutzen (17) in Strömungsverbindung steht,
wobei die Haube (21) derart in Anlage an das Führungsschienenelement (11) bringbar ist, dass einerseits über die Haube (21) eine Strömungsverbindung von dem Anschlussstutzen (17) zu einer an der Unterseite des Führungsschienenelements (11) ausgebildeten,
nach unten offenen Ausnehmung (23) besteht und andererseits die Ausnehmung (23) durch den Saugschuh (15) in einer Richtung des Führungsschienenelements (11) abgedichtet ist.

13. Führungsschienensystem nach Anspruch 12,
**dadurch gekennzeichnet, dass**
die Saugeinrichtung nach einem der Ansprüche 2 bis 11 ausgebildet ist.

14. Führungsschienensystem nach Anspruch 13,
**dadurch gekennzeichnet, dass**
es wenigstens eine Saugeinrichtung mit einem oberen Saugschuh (15A) nach Anspruch 4 und zumindest eine Saugeinrichtung mit einem unteren Saugschuh (15B) nach Anspruch 5 oder 6 umfasst.

15. Führungsschienensystem nach einem der Ansprüche 12 bis 14,
**dadurch gekennzeichnet, dass**
die Ausnehmung (23) des Führungsschienenelements (11) als geradlinige Profilnut (43) mit an den Stirnseiten des Führungsschienenelements (11) offenen Enden ausgebildet ist, wobei insbesondere das Führungsschienenelement (11) wenigstens zwei parallel verlaufende Profilnuten (43) aufweist.

16. Führungsschienensystem nach Anspruch 15,
**dadurch gekennzeichnet, dass**
zumindest eine Profilnut (43) wenigstens eine Hinterschneidung (47) aufweist.

## Claims

1. A suction device for fixing a guide rail element (11) for electric machining tools on a work surface (13), in particular on a workpiece, by means of underpressure, said guide element having a cut out (23) formed at the lower side, downwardly open and having an open end located at an end face of the guide rail element (11), having at least one suction shoe (15) comprising:
a connection stub (17) for connecting the suction device to an underpressure source (19); and
a hood (21) which is in flow communication with the connection stub (17),
**characterised in that**
the hood (21) has a contact section which can be brought into contact with an upper side or lower side of the guide rail element (11) and a sealing section which projects with respect to the contact section
so that either the guide rail element (11) can be engaged around at the end face by the sealing section on contact with the upper side or
engagement can take place into the cut-out of the guide rail element (11) on contact with the lower side, with there in each case being a flow communication via the hood (21) from the connection stub (17) to the cut-out (23), on the one hand, and the flow communication being sealed by the suction shoe (15), on the other hand.

2. A suction device in accordance with claim 1,
**characterised in that**
the suction shoe (15) includes, in addition to the connection stub (17), a suction stub (25) for connecting the suction device to a particle removal device of a machining tool (27), with in particular the suction stub (25) likewise being in flow communication with the connection stub (17).

3. A section device in accordance with claim 1 or claim 2,
**characterised in that**
the connection stub (17) has two flow passages (30, 31) which are separate from one another and which can be simultaneously connected to a common underpressure source (30, 31), with the one flow passage (30) opening into the suction stub (25) and the other flow passage (31) opening into the hood (21).

4. A suction device in accordance with at least one of the preceding claims,
**characterised in that**
the suction shoe (15) is formed as an upper suction shoe (15A) whose hood (21) can be placed onto an end of the guide rail element (11) at the end face such that the open end of the cut-out (23) opens into the hood (21), with in particular the hood (21) having a downwardly facing opening (33) which can be sealed, in particular by means of at least one elastic sealing element (35), by a section of the work surface (13) on which the guide rail element (11) lies.

5. A suction device in accordance with any one of the claims 1 to 3,
**characterised in that**
the suction shoe (15) is formed as a lower suction shoe (15B) whose hood (21) can be placed or pushed onto the lower side of the guide rail element (11) and has at least one sealing projection (37) which can be brought into engagement with the cut-out (23), in particular by insertion into the open end of the cut-out (23), to seal the cut-out (23) in the direction of the end face of the guide rail element (11), with in particular the lower suction shoe (15B) being able to be displaced along the cut-out (23) with a hood (21) placed onto the lower side of the guide rail element (11).

6. A suction device in accordance with claim 5,
**characterised in that**
the lower suction shoe (15B) includes a cover plate (39) which projects from the hood (21) and by which a section of the cut-out (23) can be sealed.

7. A suction device in accordance with any one of the preceding claims,
**characterised in that**
the hood (21) has at least one holding projection (41) which can be brought into engagement with a section groove (43) and/or a section web (45) of the guide rail element (11), with in particular at least one holding projection (41) including at least one undercut (47) to hold the suction shoe (15) at the guide rail element (11).

8. A suction device in accordance with at least one of the preceding claims,
**characterised in that**
the suction shoe (15) includes a fixing element (49) which can be actuated by an operator and which is able to fasten, in particular clamp, the suction shoe (15) to the guide rail element (11).

9. A suction device in accordance with at least one of the preceding claims,
**characterised in that**
the suction shoe (15) includes a switch element (51) which can be actuated by an operator and which can be switched between a blocked position inhibiting the underpressure and a release position, with the switch element (51) in particular being pre-loaded in the direction of the release position.

10. A suction device in accordance with at least one of the preceding claims,
**characterised in that**
the suction device includes a closure element (53), in particular a separate closure element, which can be brought into engagement with the cut-out (23) of the guide rail element (11), which can in particular be inserted into the cut-out (23), to seal the cut-out (23) at a point disposed remotely from the suction shoe (15), with the sealing position of the closure element (53) in particular being adjustable along the cut-out (23), in particular by displacement of the closure element (53) along the cut-out (23).

11. A suction device in accordance with claim 10,
**characterised in that**
the closure element (53) includes a cover plate (55) by which a section of the lower side of the guide rail element (11) can be sealed, with the closure element (53) in particular being divided transversely to the longitudinal extent of the guide rail element (11); and/or in that the closure element (53) includes a removable grip element (57), with the grip element (57) in particular bridging and holding together a multi-part cover plate (55) of the closure element (53) and/or being formed at at least one side as a position display visible from the side and/or from above.

12. A guide rail system for guiding electric machining tools, comprising:
at least one guide rail element (11) which has an upper side designed for guiding a machining tool (27), a lower side which can be placed on a work surface (13), in particular a workpiece, and at least one cut-out (23) which is formed at the lower side and is downwardly open; and
at least one suction device for fixing the guide rail element (11) on the work surface (13) by means of underpressure, with the suction device having at least one suction shoe (15) comprising:
a connection stub (17) for connecting the suction device to an underpressure source (19); and
a hood (21) which is in flow communication with the connection stub (17),
wherein the hood (21) can be brought into contact with the guide rail element (11) such that a flow communication is present via the hood (21) from the connection stub (17) to a cut-out (23) formed at the lower side of the guide rail element (11) and downwardly open,
on the one hand, and such that the cut-out (23) is sealed by the suction shoe (15) in a direction of the guide rail element (11), on the other hand.

13. A guide rail system in accordance with claim 12,
**characterised in that**
the suction device is designed in accordance with any one of the claims 2 to 11.

14. A guide rail system in accordance with claim 13,
**characterised in that**
it includes at least one suction device having an upper suction shoe (15A) in accordance with claim 4 and at least one suction device having a lower suction shoe (15B) in accordance with claim 5 or claim 6.

15. A guide rail system in accordance with any one of the claims 12 to 14,
**characterised in that**
the cut-out (23) of the guide rail element (11) is made as a straight-line section groove (43) having ends open at the end faces of the guide rail element (11), with in particular the guide rail element (11) having at least two section grooves (43) extending in parallel.

16. A guide rail system in accordance with claim 15,
**characterised in that**
at least one section groove (43) has at least one undercut (47).

## Revendications

1. Dispositif d'aspiration pour fixer un élément de rail de guidage (11) pour des machines d'usinage électriques, ledit élément comportant un évidement (23) ménagé à la face inférieure et ouvert vers le bas, avec une extrémité ouverte située au niveau d'une face frontale de l'élément de rail de guidage (11), sur une surface de travail (13), en particulier sur une pièce à oeuvrer, au moyen d'une dépression,
comportant au moins un sabot d'aspiration (15) qui comprend:
une pipe de raccordement (17) pour raccorder le dispositif d'aspiration à une source de dépression (19) ; et
un capot (21) qui est en liaison d'écoulement avec la pipe de raccordement (17),
**caractérisé en ce que**
le capot (21) comprend un tronçon de contact susceptible d'être amené en contact contre une face supérieure ou une face inférieure de l'élément de rail de guidage (11), et un tronçon d'étanchéité en saillie par rapport au tronçon de contact, de sorte que, avec le tronçon d'étanchéité, en cas de contact contre la face supérieure, l'élément de rail de guidage (11) peut être entouré du côté frontal, ou bien en cas de contact contre la face inférieure, il est possible de l'engager dans l'évidement de l'élément de rail de guidage (11), de telle sorte que d'une part il existe via le capot (21) une liaison d'écoulement depuis la pipe de raccordement (17) vers l'évidement (23), et que d'autre part la liaison d'écoulement est étanchée par le sabot d'aspiration (15).

2. Dispositif d'aspiration selon la revendication 1,
**caractérisé en ce que** le sabot d'aspiration (15) comprend, additionnellement à la pipe de raccordement (17), une pipe d'aspiration (25) pour raccorder le dispositif d'aspiration à un dispositif d'évacuation de particules d'une machine d'usinage (27), et la pipe d'aspiration (25) est en particulier également en liaison d'écoulement avec la pipe de raccordement (17).

3. Dispositif d'aspiration selon la revendication 1 ou 2,
**caractérisé en ce que** la pipe de raccordement (17) comprend deux canaux d'écoulement (30, 31) séparés l'un de l'autre et susceptibles d'être simultanément raccordés à une source de dépression commune, de sorte que l'un des canaux d'écoulement (30) débouche dans la pipe d'aspiration (25) et que l'autre canal d'écoulement (31) débouche dans le capot (21).

4. Dispositif d'aspiration selon l'une au moins des revendications précédentes,
**caractérisé en ce que** le sabot d'aspiration (15) est réalisé comme sabot d'aspiration supérieur (15A), dont le capot (21) est susceptible d'être posé sur une extrémité frontale de l'élément de rail de guidage (11) de telle façon que l'extrémité ouverte de l'évidement (23) débouche dans le capot (21), et le capot (21) comporte en particulier une ouverture (33) tournée vers le bas, laquelle est susceptible d'être étanchée, en particulier au moyen d'au moins un élément d'étanchement élastique (35), via un tronçon de la surface de travail (13) sur laquelle repose l'élément de rail de guidage (11).

5. Dispositif d'aspiration selon l'une des revendications 1 à 3,
**caractérisé en ce que** le sabot d'aspiration (15) est réalisé comme sabot d'aspiration inférieur (15B), dont le capot (21) est susceptible d'être posé ou d'être enfilé sur la face inférieure de l'élément de rail de guidage (11), et comporte au moins une saillie d'étanchement (37) qui peut être amenée en engagement avec l'évidement (23), en particulier par introduction dans l'extrémité ouverte de l'évidement (23) afin d'étancher l'évidement (23) en direction de la face frontale de l'élément de rail de guidage (11), et le sabot d'aspiration inférieur (15B) est en particulier déplaçable en translation le long de l'évidement (23) lorsque le capot (21) est posé sur la face inférieure de l'élément de rail de guidage (11).

6. Dispositif d'aspiration selon la revendication 5,
**caractérisé en ce que** le sabot d'aspiration inférieur (15B) comprend une plaque de couverture (39) qui dépasse du capot (21) et au moyen de laquelle un tronçon de l'évidement (23) peut être étanché.

7. Dispositif d'aspiration selon l'une des revendications précédentes,
**caractérisé en ce que** le capot (21) comporte au moins une saillie de retenue (41), laquelle peut être amenée en engagement avec une gorge profilée (43) et/ou une barrette profilée (45) de l'élément de rail de guidage (11), et en particulier au moins une saillie de retenue (41) comporte une contre-dépouille (47), afin de maintenir le sabot d'aspiration (15) sur l'élément de rail de guidage (11).

8. Dispositif d'aspiration selon l'une au moins des revendications précédentes,
**caractérisé en ce que** le sabot d'aspiration (15) comprend un élément d'immobilisation (49), susceptible d'être actionné par un utilisateur, qui est en mesure de fixer, en particulier de coincer fermement, le sabot d'aspiration (15) sur l'élément de rail de guidage (11).

9. Dispositif d'aspiration selon l'une au moins des revendications précédentes,
**caractérisé en ce que** le sabot d'aspiration (15) comprend un élément de commutation (51) susceptible d'être actionné par un utilisateur, lequel peut être commuté entre une position de blocage qui s'oppose à la dépression et une position de libération, et l'élément de commutation (51) est en particulier précontraint en direction de la position de libération.

10. Dispositif d'aspiration selon l'une au moins des revendications précédentes,
**caractérisé en ce que** le dispositif d'aspiration comprend un élément de terminaison (53), en particulier séparé, qui est peut être amené en engagement avec l'évidement (23) de l'élément de rail de guidage (11), et peut en particulier être enfiché dans l'évidement (23) afin d'étancher l'évidement (23) à un emplacement disposé en éloignement du sabot d'aspiration (15), la position d'étanchement de l'élément de terminaison (53) étant en particulier déplaçable le long de l'évidement (23), en particulier par translation de l'élément de terminaison (53) le long de l'évidement (23).

11. Dispositif d'aspiration selon la revendication 10,
**caractérisé en ce que**
l'élément de terminaison (53) comprend une plaque de couverture (55) au moyen de laquelle un tronçon de la face inférieure de l'élément de rail de guidage (11) peut être étanché, et l'élément de terminaison (53) est en particulier subdivisé transversalement à l'extension longitudinale de l'élément de rail de guidage (11), et/ou
l'élément de terminaison (53) comprend un élément d'agrippement (57) amovible, ledit élément d'agrippement (57) coiffant et maintenant ensemble une plaque de couverture (55) en plusieurs parties de l'élément de terminaison (53), et/ou est réalisé au moins sur un côté comme un indicateur de position visible depuis le côté et/ou depuis le haut.

12. Système de rail de guidage pour guider des machines d'usinage électriques, qui comprend :
au moins un élément de rail de guidage (11) qui comprend une face supérieure réalisée pour le guidage d'une machine d'usinage (27), une face inférieure susceptible d'être posée sur une surface de travail (13),
en particulier sur une pièce à oeuvrer, et au moins un évidement (23) ménagé à la face inférieure et ouvert vers le bas ; et
au moins un dispositif d'aspiration pour fixer l'élément de rail de guidage (11) sur la surface de travail (13) au moyen d'une dépression,
et le dispositif d'aspiration comprend au moins un sabot d'aspiration (15) qui comprend :
une pipe de raccordement (17) pour brancher le dispositif d'aspiration à une source de dépression (19) ; et
un capot (21) qui est en relation d'écoulement avec la pipe de raccordement (17), dans lequel le capot (21) peut être amené en appui contre l'élément de rail de guidage (11) de telle façon que d'une part il existe via le capot (21) une liaison d'écoulement depuis la pipe de raccordement (17) vers un évidement (23) ménagé à la face inférieure de l'élément de rail de guidage (11) et ouvert vers le bas, et que d'autre part l'évidement (23) est étanché par le sabot d'aspiration (15) dans une direction de l'élément de rail de guidage (11).

13. Système de rail de guidage selon la revendication 12,
**caractérisé en ce que** le dispositif d'aspiration est réalisé suivant l'une des revendications 2 à 11.

14. Système de rail de guidage selon la revendication 13,
**caractérisé en ce qu'**il comprend au moins un dispositif d'aspiration avec un sabot d'aspiration supérieur (15A) selon la revendication 4, et au moins un dispositif d'aspiration avec un sabot d'aspiration inférieur (15B) selon la revendication 5 ou 6.

15. Système de rail de guidage selon l'une des revendications 12 à 14,
**caractérisé en ce que** l'évidement (23) de l'élément de rail de guidage (11) est réalisé comme une gorge profilée rectiligne (43) avec des extrémités ouvertes au niveau des faces frontales de l'élément de rail de guidage (11), et l'élément de rail de guidage (11) comporte en particulier au moins deux gorges profilées (43) qui s'étendent parallèlement.

16. Système de rail de guidage selon la revendication 15,
**caractérisé en ce qu'**au moins une gorge profilée (43) comporte au moins une contre-dépouille (47).
